Europäisches Patentamt

European Patent Office

Office européen des brevets

(11) Numéro de publication: **0 116 241**
**B1**

## (12) FASCICULE DE BREVET EUROPEEN

(45) Date de publication du fascicule du brevet:
**07.01.87**

(21) Numéro de dépôt: **83402082.8**

(22) Date de dépôt: **26.10.83**

(51) Int. Cl.⁴: **G 01 F 1/08**

---

(54) Turbine pour compteur d'un débit de liquide à jets multiples.

---

(30) Priorité: **10.12.82 FR 8220696**
**07.06.83 FR 8309396**

(43) Date de publication de la demande:
**22.08.84 Bulletin 84/34**

(45) Mention de la délivrance du brevet:
**07.01.87 Bulletin 87/2**

(84) Etats contractants désignés:
**BE CH DE GB IT LI LU NL**

(56) Documents cités:
**DE - A - 2 338 327**
**DE - C - 181 070**
**DE - C - 321 348**
**DE - C - 720 358**
**FR - A - 1 289 529**
**FR - A - 2 352 284**
**GB - A - 18 905**

(73) Titulaire: **SAPPEL Société Anonyme française, 67, rue du Rhône, F-68304 Saint-Louis (FR)**

(72) Inventeur: **Roy, Daniel, 29 rue des Champs, F-68300 Saint Louis (FR)**

(74) Mandataire: **Cuer, André, CABINET CUER 30, rue de Léningrad, F-75008 Paris (FR)**

## Description

La présente invention a trait au domaine des dispositifs destinés à mesurer le débit et/ou la vitesse d'écoulement d'un liquide. Elle concerne tout spécialement une nouvelle turbine destinée à équiper un compteur d'eau ou autre liquide selon la technique dite à jets multiples.

Les compteurs d'eau dits «de première prise», par exemple ceux installés au pied d'un immeuble, peuvent être classés en deux groupes principaux à savoir: les compteurs volumétriques de types à piston ou à disque oscillant ou encore à cylindre tournant; et les compteurs rotatifs dits de vitesse dans lesquels on mesure le volume d'eau écoulé à partir du nombre de tours accomplis par un dispositif rotatif mis en mouvement par le liquide. Ce dernier peut être du type soit à jet unique, comme par exemple une roue de moulin dans l'eau, soit à jets multiples ou «multijets» auquel cas une turbine (ou rotor) est disposée dans un distributeur cylindrique percé de deux rangées superposées de trous servant respectivement à l'entrée et à l'évacuation de l'eau dont la vitesse entraîne la turbine, cette dernière étant équipée sur son axe d'un totalisateur à aiguilles tournates ou à rouleaux numérotés pour la mesure du fluide débité.

L'invention se place dans le cadre de ces dispositifs multijets et propose une notable amélioration dans le système de la turbine.

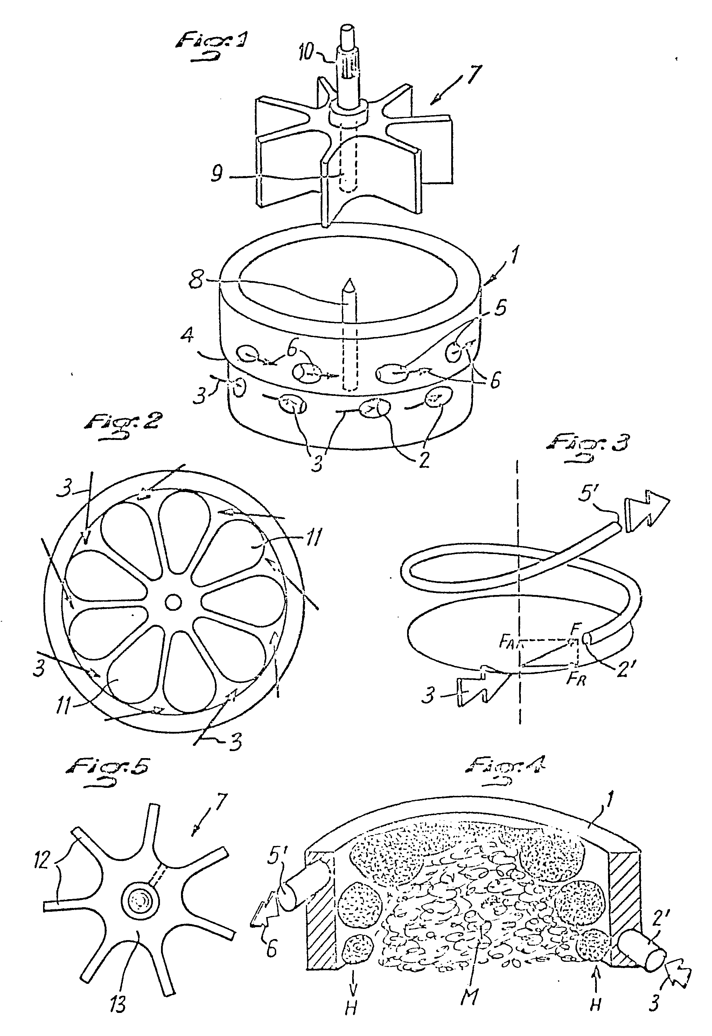

Pour mieux comprendre le cheminement de l'idée inventive et l'intérêt du perfectionnement apporté, on rappelera ci-dessous la structure et les limites de fonctionnement du système connu à jets multiples, en se reportant aux dessins schématiques des figures 1 à 5 des planches annexées, qui représentent:

figure 1 une vue en perspective d'un distributeur conventionnel et de sa turbine;

figure 2 une vue de dessus du fond du distributeur avec représentation des orientations du flux liquide d'entrée;

figure 3 le cheminement d'une veine liquide au sein du distributeur pendant la rotation de la turbine;

figure 4 l'organisation du flux au sein des diverses parties du distributeur;

figure 5 une vue de dessus d'une turbine conventionnelle.

Dans un tel dispositif classique à multijets, le boîtier du distributeur 1 est munie de perforations, à intervalles réguliers, qui sont toutes orientées selon des plans de perçage décalés entre eux de façon telle que le flux d'entrée et de sortie s'écoule tangentiellement (ou le plus près possible) aux parois du distributeur. Ainsi, le cylindre 1 comporte une première rangée inférieure de trous 2 destinés à l'introduction du fluide (par exemple de l'eau) selon les flèches 3 et, au-dessus du décrochement 4 du boîtier, une seconde rangée supérieure de trous 5 servant à l'évacuation de l'eau vers l'orifice de sortie du compteur selon les flèches 6. Une turbine 7 est disposée au sein du boîtier cylindrique 1 dont le téton central 8 s'engage dans la partie creuse de l'axe 9 de la turbine, ce dernier étant surmonté de la tige nervurée 10 qui sera reliée au totalisateur du capteur.

Le flux d'entrée d'eau 3 qui sert à l'entraînement de la turbine 7 suit, depuis un orifice d'entrée 2', jusqu'à un orifice de sortie 5' un parcours hélicoïdal, illustré sur la figure 3, qui communique à la turbine une force F pouvant se décomposer en une force $F_R$ entraînant la turbine en rotation et une force $F_A$ communiquant à la turbine un mouvement ascendant. La force $F_A$ est destinée à vaincre l'action de la pesanteur afin d'annuler les contraintes de frottement qui font obstacle à la force $F_R$ aux petits débits.

En régime turbulent, la force $F_R$ est sensiblement proportionnelle au carré du débit de flux d'entrée dans le distributeur. Pour obtenir une vitesse de rotation de turbine parfaitement proportionnelle au débit — condition indispensable pour la précision du compteur — il est nécessaire de créer une force antagoniste à $F_R$ de façon telle que la résultante de cette force soit directement proportionnelle au débit. Ce résultat est généralement atteint par la création d'une série de nervures dans le boîtier cylindrique 1, par exemple celles disposées en étoile et numérotées 11 sur le fond du boîtier figure 2. Dans un système tel que celui décrit, l'organisation du flux peut alors être considérée comme se répartissant d'une part en un courant hélicoïdal H, illustré par les zones noires de la figure 4, sur la périphérie interne du distributeur ou boîtier 1 et, d'autre part, en une zone tourbillonnaire centrale M qui sera dénommée maelström ou malstrom au cours de la présente description.

Les turbines utilisées jusqu'à présent dans les compteurs à eau multijets sont constituées, comme on peut le voir sur les figures 1 et 5, par des pales ou aubes 12 disposées concentriquement autour d'un noyau central 13 dont les dimensions sont assez importantes puisque le volume occupé par ce noyau correspond à une grande partie de la zone précitée ou malstrom, dont le but est de freiner l'énergie des pales. De ce fait, on constate fréquemment de sérieuses pertubations dans l'équilibre hydraulique tel que décrit précédemment et le résultat souhaité dans le comptage de débit de fluide n'est pas toujours atteint ou l'est de façon très instable, ce qui, dans les deux cas, rend plus ou moins aléatoire la stabilité métrologique du compteur.

Des constructions de ce type où le noyau central, prolongé par des pales, occupe une partie importante de la zone tourbillonnaire (ou maelström) et perturbe donc l'équilibre hydraulique, sont décrits par exemple dans les brevets DE-C-181 070 et DE-C-720 385.

L'un des buts principaux de l'invention est donc de pallier les inconvénients dus au type de turbine utilisé jusqu'ici et d'obtenir un système de distributeur fournissant une répartition et un équilibre hydraulique du fluide sans perturbation de façon à atteindre pratiquement les conditions idéales de circulation et comptage du fluide.

Un autre but est de proposer un rotor de structure allégée, immédiatement adaptable aux boîtiers-distributeurs de type précité et dont la conception permet d'aboutir à des compteurs de fluide, notamment d'eau, de grande fiabilité.

Conformément à l'invention, la nouvelle turbine est caractérisée selon la revendication 1.

Ainsi, dans cette nouvelle conception de rotor adapté au boîtier distributeur classique, la partie centrale perturbant l'équilibre hydraulique est totalement supprimée et la zone de malström n'est plus

isolée du courant hélicoïdal précité de circulation de flux; le mélange des courants liquides s'effectue de façon homogène, sans turbulence désordonnée ni interaction tumultueuse des veines de flux.

La turbine selon l'invention présente en outre d'autres avantages. Par exemple, la présence du disque de liaison des pales, qui offre une grande surface à l'action du flux d'entraînement, permet de faciliter notablement l'ascension de la turbine sous l'action de la forme $F_A$ comme expliqué ci-dessus. Par ailleurs, un tel disque, par la force centrifuge qu'il engendre, présente l'intérêt de protéger, l'organe ou tige de liaison au système de totalisation du compteur. Il est en effet fréquent que de tels organes soient encrassés, par exemple de particules magnétiques lorsque le totalisateur est de type aimant, ou encore usés prématurément par les grains sableux lorsque la tige est du genre pignon.

Bien etendu, du fait que la structure de cette turbine ne modifie par l'organisation hydraulique du flux, il est possible d'en utiliser tous les avantages en modifiant de diverses façons le profil des pales afin de tirer partie au maximum de tous les types de mouvements du liquide.

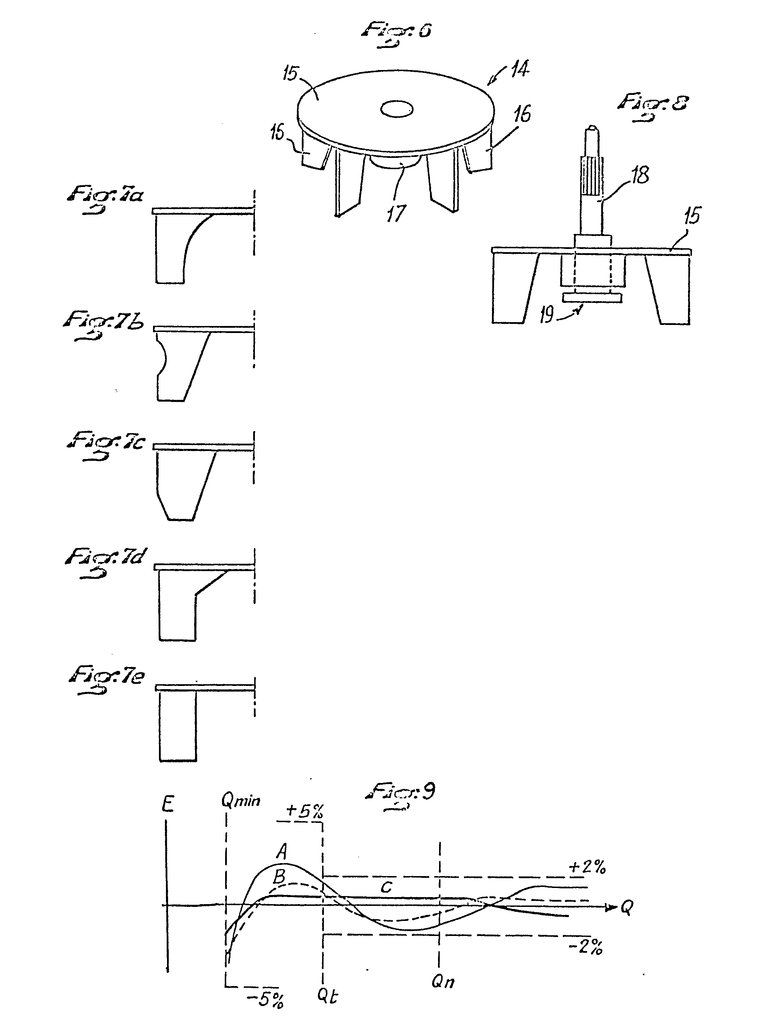

Ces disverses possibilités sont illustrés par les dessins annexés des figures 6 à 12 qui représentent schématiquement:

figure 6 une vue en perspective d'une structure de turbine selon l'invention;

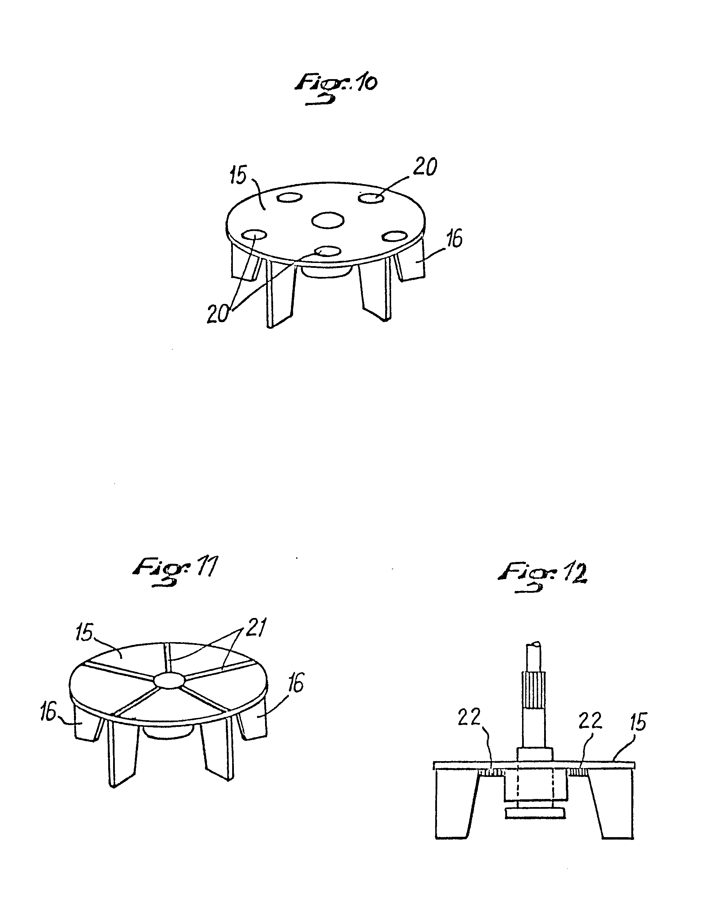

figures 7a à 7e diverses formes de pales pour une telle turbine;

figure 8 une vue de profil illustrant une position de la tige de liaison de la turbine à un totalisateur de compteur;

figure 9 représentation des écarts ou erreurs (E) habituels ou tolérés par rapport au débit dans un compteur multijet;

figures 10 à 12 plusieurs variantes de réalisation du disque constituant la turbine selon l'invention.

Conformément à une réalisation avantageuse de l'invention, la turbine 14 est constituée par une pièce unitaire comprenant un bras de faible épaisseur — ici un disque mince 15 — qui supporte plusieurs pales 16 et au centre de laquelle est conformée une bague annulaire 17 dans laquelle peut s'engager, par exemple, la tige 18 de liaison au dispositif totalisateur du compteur (non représenté). Cette tige est munie à sa base d'une partie creuse 19 qui vient sengager dans le téton central dont est muni le boîtier-distributeur (repéré en 8 sur la figure 1).

La forme de pale 16 la plus courante est illustrée sur les figures 6 et 8. Toutefois, d'autres configurations plus adaptées à certains débits et/ou à divers types de fluide peuvent être envisagées, dont quelques-unes sont représentées à titre non limitatif sur les figures 7a à 7e.

En pratique, le nombre de pales verticales sous le bras ou disque porteur peut varier entre diverses limites. Dans les distributeurs de compteurs multijets utilisés actuellement et rappelés sur les schémas des figures 1 à 5, on prévoit des turbines munies de sept pales pour deux rangées de dix trous chacune sur le distributeur. Selon une caractéristique de l'invention, le rapport entre le nombre de trous et le nombre de pales est de préférence un nombre entier; par exemple, on prévoit cinq pales seulement (au lieu de sept) pour des boîtiers équipés de dix perforations sur chaque rangée inférieure et supérieure pour l'entrée et la sortie de l'eau.

Il a en outre été trouvé que l'on pouvait encore améliorer, dans certains cas, le fonctionnement de cette turbine en y apportant divers aménagements.

Conformément à une première série de perfectionnements, la turbine selon l'invention est munie sur sa surface de moyens permettant de freiner sa vitesse lorsque l'on a affaire à de très forts débits de fluide. Il a en effet été constaté que dans de tels cas, le disque à pales pouvait s'emballer et qu'il était alors nécessaire de créer en quelque sorte des turbulences supplémentaires dans la zone d'agitation du fluide pour ralentir le mouvement de ce disque.

Selon un premier mode de réalisation, illustré sur la figure 10, le disque 15 est avantageusement percé de trous 20 qui sont ménagés dans l'intervalle entre deux pales 16; on a par exemple prévu ici cinq perforations.

Selon un autre mode d'exécution, le moyen de freinage peut être constitué par des nervures ou saillies qui sont pratiquées au niveau de chacune des pales et de façon concentrique. Comme on peut le voir sur la figure 11, ces nervures 21 sont situées sur la face supérieure du disque 15; au contraire selon la variante de la figure 12, les nervures 22 sont ménagées sur la face inférieure du disque 15 en prolongement des plaes 16. Mais on peut aussi prévoir la combinaison de ces deux systèmes.

La mise en oeuvre d'une nouvelle turbine conforme à l'invention sur in boîtier-distributeur conventionnel (du type figure 1) permet de régulariser le débit de fluide mesuré et de se rapprocher ou d'atteindre la courbe idéale dans les calculs d'erreurs relatives sur les mesures de débits des compteurs connus à ce jour. On peut se reporter à cet égard à la figure 9 où l'on a représenté les écarts ou erreurs (E) habituels (5%) ou tolérés (2%) par rapport au débit d'eau Q dans un compteur multijet, ceci au niveau du débit minimum Q min, du débit de transition Qt et du débit nominal Qn. La courbe A est figurative du fonctionnement d'un compteur multijet de l'art antérieur tel que décrit en début de description. La courbe B illustre également le cas d'un compteur du type précité où tous les réglages optimum ont été fait pour réduire les marges d'erreurs. Enfin, la courbe C, correspondant à une marge d'erreurs minime ou quasi nulle, a été obtenue par mise en oeuvre d'une turbine selon l'invention, telle que celle illustrée sur la figure 6. En outre, en mettant en oeuvre une turbine aménagée selon les perfectionnements des figures 10 ou 11, 12, on peut encore linéariser cette courbe d'exactitude de mesure aux différents débits, notamment dans le cas où elle deviendrait trop ascendante pour un débit de fluide très élevé.

Bien entendu, sans sortir du cadre de l'idée mère de l'invention de base consistant à substituer au rotor classique à aubes déployées autour d'un noyau central un disque plat muni de pales radiales, on peut envisager d'autres variantes intéressantes de réalisation. Par exemple le disque mince en cause peut être installé non plus dans le haut du boîtier-distributeur mais dans la zone médiane, les pales périphériques étant alors disposées de part et d'autre de la surface de ce disque. Selon une autre variante, on peut prévoir le montage de deux disques parallèles conformes à l'invention et rendus solidaires entre eux par les pales verticales. Ces deux modes d'exécution peuvent s'avérer également très avantageux dans les types de compteurs d'eau dits à jet unique.

**Revendications**

1. Turbine pour compter de liquide à jets multiples du type comportant un boîtier ou distributeur (1) muni d'une rangée inférieure de premières perforations (2) pour l'entrée du liquide et d'une rangée supérieure de secondes perforations (5) pour l'éjection du liquide, ce dernier entraînant dans son mouvement un rotor ou turbine montée en rotation dans le boîtier et dont la partie centrale est solidaire d'une tige nervurée servant de liaison au totalisateur, la turbine étant caractérisée en ce qu'elle est constituée par au moins un disque horizontal mince (15) ayant une partie centrale perforée qui sert de guide à ladite tige de liaison (18) au totalisateur, ledit disque (15) occupant sensiblement toute la surface interne du distributeur (1) et supportant une série de pales verticales (16) disposées concentriquement à l'axe du disque et s'étendant depuis la périphérie de celui-ci en direction de ladite partie centrale perforée.

2. Turbine selon la revendication 1, caractérisée en ce que le rapport entre le nombre de perforations sur chaque rangée de perforation (2, 5) du distributeur (1) et le nombre de pales est un nombre entier.

3. Turbine selon l'une quelconque des revendications 1 ou 2, caractérisée en ce que le disque (15) est en outre pourvu de moyens destinés à freiner sa vitesse lors de forts débits de liquide.

4. Turbine selon la revendication 3, caractérisée en ce que lesdits moyens sont constitués par des trous (20) ménagés sur le disque dans les intervalles séparant deux pales (16) successives.

5. Turbine selon la revendication 3, caractérisée en ce que lesdits moyens sont constitués par des nervures radiales (21, 22) pratiquées sur la face supérieure du disque au droit des pales (16) et/ou sur la face inférieure dans le prolongement desdites pales.

6. Turbine selon l'une quelconque des revendications 1 à 5, caractérisée en ce que le disque (15) est installé dans la partie supérieure du distributeur (1).

7. Turbine selon l'une quelconque des revendications 1 à 5, caractérisée en ce que le disque (15) est installé dans la partie médiane du distributeur (1), les pales verticales (16) étant alors disposées de part et d'autre de la surface du disque.

8. Turbine selon l'une quelconque des revendications 1 à 7, caractérisée en ce qu'elle est constituée par deux disques (15) reliés entre eux par lesdites pales verticales (16).

**Patentansprüche**

1. Flüssigkeitszählturbine mit Mehrfachdüsen und mit einem Gehäuse bzw. Verteiler (1), das bzw. der mit einer unteren ersten Lochreihe (2) für den Eintritt der Flüssigkeit und mit einer oberen zweiten Lochreihe (5) für den Austritt der Flüssigkeit versehen ist, wobei letztere einen Drehteil oder eine Turbine in Drehung versetzt, der bzw. die drehbar im Gehäuse angeordnet ist und dessen bzw. deren zentraler Abschnitt drehfest mit einer mit Flügeln ausgestatteten, eine Verbindung mit dem Saldierwerk bewerkstelligenden Welle verbunden ist, dadurch gekennzeichnet, dass die Turbine mindestens eine horizontale dünne Scheibe (15) aufweist, deren zentraler Abschnitt als Führung für die mit dem Saldierwerk verbundene Verbindungswelle (18) dient, und die im wesentlichen die ganze innere Oberfläche des Verteilers (1) aufnimmt und die mehrere senkrecht stehende Schaufelblätter (16) trägt, die konzentrisch mit Bezug auf die Achse der Scheibe angeordnet sind und die sich von deren Umfang in Richtung auf den genannten Abschnitt des genannten zentralen mit Löchern versehenen Abschnitts erstrecken.

2. Turbine nach Anspruch 1, dadurch gekennzeichnet, dass das Verhältnis zwischen der Anzahl der Löcher in jeder Lochreihe (2, 5) des Verteilers (1) und der Anzahl der Schaufelblätter eine ganze Zahl darstellt.

3. Turbine nach einem der Ansprüche 1 und 2, dadurch gekennzeichnet, dass die Scheibe (15) auch mit Einrichtungen versehen ist, um sie bei grösseren Flüssigkeitsmengen zu verlangsamen.

4. Turbine nach Anspruch 3, dadurch gekennzeichnet, dass die Einrichtungen als in der Scheibe praktizierte Öffnungen vorliegen (20), die in den zwischen jeweils zwei nacheinander angeordneten Schaufelblättern vorhandenen Zwischenräumen vorgesehen sind.

5. Turbine nach Anspruch 3, dadurch gekennzeichnet, dass die genannten Einrichtungen als radiale Flügel (21, 22) ausgebildet sind, die in der oberen Seite der Scheibe unter Ausfluchtung mit den Schaufelblättern (16) und/oder an der unteren Seite in der Verlängerung der genannten Schaufelblätter vorgesehen sind.

6. Turbine nach einem der Ansprüche 1 bis 5, dadurch gekennzeichnet, dass die Scheibe (15) im oberen Abschnitt des Verteilers (1) angeordnet ist.

7. Turbine nach einem der Ansprüche 1 bis 5, dadurch gekennzeichnet, dass die Scheibe (15) im mittleren Abschnitt des Verteilers (1) angeordnet ist, wobei die senkrechten Schaufelblätter (16) dann auf beiden Seiten der Scheibe angeordnet sind.

8. Turbine nach einem der Ansprüche 1 bis 7, dadurch gekennzeichnet, dass sie als zwei miteinander über senkrechte Schaufelblätter (16) verbundene Scheiben (15) ausgebildet ist.

**Claims**

1. A turbine for a multi-jet liquid meter of the type including a housing or distributor (1) having a first array of openings (2) in a lower wall portion for influx of liquid into the housing and a second array of openings (5) in an upper wall portion for outflux of said liquid, this last involving in its motion a rotor or turbine rotating in the housing and of which the central portion is locked with a ribbed stem joining the adding-machine, the said turbine being characterized by the fact it comprises at least a thin horizontally disk (15) having a bored central portion acting as a guide for the said stem joining (18), the said disk (15) filling perceptibly all the internal surface of the distributor (1) and supporting a plurality of vertical blades (16) arranged concentrically to the axis of the disk and extending from the periphery of the disk towards the said bored central portion.

2. A turbine according the claim 1, wherein the ratio between the number of openings on each array of openings (2, 5) of the distributor (1) and the number of blades is an integer.

3. A turbine according any one of the claims 1 or 2, wherein the disk (15) is moreover provided with means for slowing its speed of rotation during strong liquid flows.

4. Turbine according to claim 3, wherein the said means consist of perforations (20) in the said disk located between two adjacent blades (16).

5. Turbine according the claim 3, wherein the said means consist of radial ribs (21, 22) disposed on the upper surface of the disk and positioned above each blades (16) and/or on the lower surface of the disk in the extension of said blades.

6. Turbine according any one of the claims 1 to 4, wherein the disk (15) is positioned in the upper portion of the distributor (1).

7. Turbine according any one of the claims 1 to 5, wherein the disk (15) is positioned in the central portion of the distributor (1) the vertical blades (16) being then placed on both sides of the surface of the disk.

8. Turbine according any one of the claims 1 to 7, wherein its comprises two disks (15) connected between them by the said vertical blades (16).

Fig.1

Fig.2

Fig.3

Fig.5

Fig.4

Fig.6

15  14
15  16
17

Fig.8

18
15
19

Fig.7a

Fig.7b

Fig.7c

Fig.7d

Fig.7e

Fig.9

$E$  $Q_{min}$  $+5\%$

$A$

$B$  $+2\%$

$C$

$Q$

$-2\%$

$-5\%$  $Q_t$  $Q_n$

**Fig. 10**

**Fig. 11**

**Fig. 12**